Europäisches Patentamt

European Patent Office

Office européen des brevets

(11) Publication number: **0 152 085**
**B1**

## (12) EUROPEAN PATENT SPECIFICATION

(45) Date of publication of patent specification: **12.12.90**

(51) Int. Cl.⁵: **A 01 F 15/00**

(21) Application number: **85101384.7**

(22) Date of filing: **09.02.85**

(54) Baling machine.

(30) Priority: **15.02.84 EP 84101555**

(43) Date of publication of application:
**21.08.85 Bulletin 85/34**

(45) Publication of the grant of the patent:
**12.12.90 Bulletin 90/50**

(84) Designated Contracting States:
**DE FR GB IT NL**

(56) References cited:
**DE-A-2 649 334**
**FR-A-1 235 427**
**GB-A-2 023 525**
**US-A-2 787 108**
**US-A-2 886 169**
**US-A-3 522 693**

(73) Proprietor: **DEERE & COMPANY**
**1 John Deere Road**
**Moline, Illinois 61265 (US)**

(72) Inventor: **Anstey, Henry Dennis**
**Rural Route 4 Box 188A**
**Ottumwa Iowa 52501 (US)**

(74) Representative: **Feldmann, Bernhard**
**DEERE & COMPANY European Office Patent**
**Department Steubenstrasse 36-42**
**D-6800 Mannheim 1 (DE)**

Courier Press, Leamington Spa, England.

## Description

This invention relates to a machine for harvesting crop having rotatable rolls for moving the crop, excluding any machine which falls within the extent of protection conferred by European Patent No. 151 665, a said roll having a scraper assembly comprising a scraper for preventing the crop being carried round the roll. The machine can be a baling machine, for forming cylindrical bales of crop, having a main frame on which the rolls are mounted to provide a baling chamber for the crop.

Machines, towed by a tractor, for forming large cylindrical bales of hay (so called "round" balers) are well known. As the machine advances, the crop is removed from a window by a pick-up mechanism and delivered rearwardly to a baling chamber where it is rolled into a bale between sets of oppositely moving belts, the growing bale rotating about a horizontal axis and the baling chamber expanding with the bale. The belts are trained over rolls which extend laterally of the machine and most of which are journalled at either end in the sides of the machine.

During baling, stray crop can become entrapped in the region between the sides of the baler, the outermost belts and the rolls, whereupon the crop tends to wrap round the roll ends which can be detrimental to belt tracking on the rolls. The crop can also find its way into the bearings of the rolls and foul them.

In our co-pending European patent application 82106409 we have described and claimed a baling machine which is designed to obviate the wrapping of crop along the length of a roll. In one arrangement described, an additional roll is provided over which the belts are alternately trained to give a staggered array with openings between the belts enabling stray crop to escape.

It is also known, e.g. from US—A—4 155 298, to provide a scraper along the length of a roll in very close proximity to the roll surface to scrape off the wrapping crop, but although this may work well in some crop conditions if the roll is very accurately formed, it is not so satisfactory if these circumstances do not apply.

The present invention reduces the problem of crop wrapping round rolls and is particularly useful when used to protect the ends of the rolls. It can be employed in conjunction with the invention of EP 82106409 or independently.

According to the present invention the scraper assembly includes an elongated member rigid with the roll and extending along it, the scraper being in contact with the member or closely spaced therefrom.

The elongated member can be machined more easily with greater accuracy than the roll.

The elongated member is preferably in the form of·a spiral for moving the crop along the roll.

A scraper assembly can be provided at both end regions of the roll in the vicinity of bearings therefor. If the elongated element of each assembly is a spiral, then the spirals are of opposite hand to move crop inwardly away from the bearings.

In a further aspect of the invention a roll assembly, for a harvesting machine, e.g. a baling machine for forming cylindrical bales of crop, excluding any roll assembly which falls within the extent of protection conferred by European patent no. 151 665, comprises a roll having a said scraper assembly or assemblies.

Existing baling machines can be modified by replacing appropriate original rolls with new rolls having a scraper assembly or assemblies.

The invention is applicable to "round" balers of the belt-type (in which belts contact the crop and are trained over the rolls) and of the roll-type (in which the rolls contact the crop direct). The invention can also be applied to a forage harvester.

Reference has been made above to European Patent No. 151 665. This has been granted to the present applicants in respect of the same designated contracting states, with a reference date of 15.02.84. It has the following independent claims:

A baling machine for forming cylindrical bales of crop material having: a main frame, rotatable transverse rolls mounted thereon and belts trained over the rolls to provide a baling chamber for the crop material, a said roll having a scraper assembly comprising a scraper for preventing the crop being carried round the roll characterised in that the scraper assembly includes a spiral at the surface of the roll and fixed thereto for moving crop therealong, the scraper being in contact with the spiral or closely spaced therefrom.

A roll assembly, for a harvesting machine for crop material, comprising a roll and a scraper for preventing when in service the crop being carried round the roll characterised in that the roll has at both end regions thereof a spiral fixed to the roll, the spirals being of opposite hand to move crop inwardly of the end regions, and the roll assembly has a said scraper for each spiral for mounting in contact therewith, or closely spaced therefrom.

A machine for harvesting crop material having rotatable rolls which can contact the crop material, a said roll having a scraper assembly comprising a scraper for preventing the crop being carried round the roll characterised in that the scraper assembly includes a spiral fixed to the roll for moving crop therealong the scraper being in contact therewith, or closely spaced therefrom.

Embodiments of the invention will now be described with reference to the accompanying diagrammatic drawings in which:

Fig. 1 is an elevational view of the right hand side (considered when facing the direction of advancement) of a baling machine for forming large cylindrical bales of hay or straw showing in broken lines the disposition of the transverse rolls and belts trained round the rolls within the machine;

Fig. 2 is an elevational view similar to Fig. 1, but with the right hand side of the machine removed;

Fig. 3 is an elevational view of the right hand end of the lower foremost roll in Fig. 1 looking from the front toward the rear which has a scraper assembly, with a portion of an end belt cut away to reveal the assembly and with its neighbouring belt omitted;

Fig. 4 is a cross-section taken on the line IV—IV of Fig. 3;

Fig. 5 is an elevational view similar to Fig. 3, but with a different scraper assembly;

Fig. 6 is a cross-section similar to that of Fig. 4, but taken on the line VI—VI of Fig. 5; and

Fig. 7 is an elevational view of the roll with a pair of further scraper assemblies.

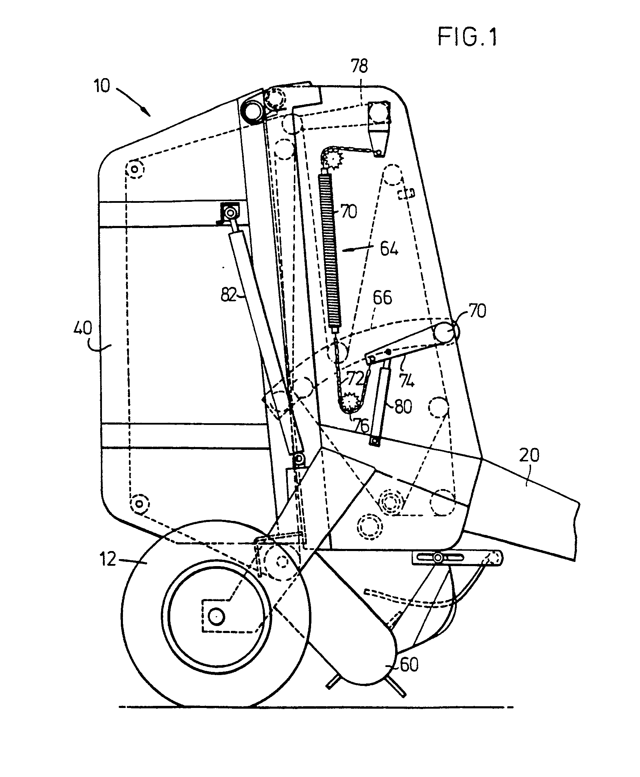

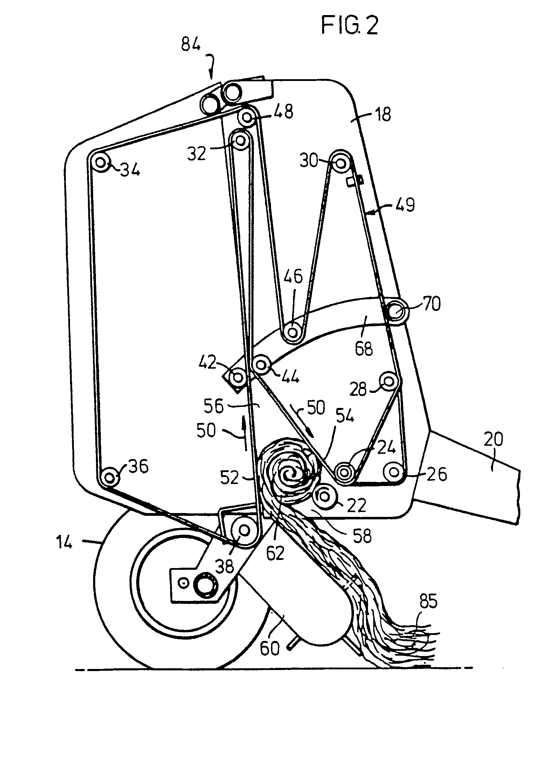

In the drawings (and particularly in Figs. 1 and 2), the machine includes a main frame 10 mounted on a pair of wheels 12, 14. The main frame 10 has a pair of upright, opposite, fore-and-aft extending right and left side walls 16, 18 connected by transverse beams (not shown). A draft tongue 20 is connected to a cross beam at the front of the frame 10 and extends forwardly for attaching the baler to a tractor (also not shown) which draws the machine.

A plurality of lateral rolls, shown in broken lines in Fig. 1 and in full lines in Fig. 2, extends over the width of the machine. One set of rolls 22, 24, 26, 28, 30, 32 is journalled in a forward fixed portion of either side wall, whilst a further set constituted by rolls 34, 36, 38 is journalled in a rearward swingable gate portion 40 of the side walls. There are also a pair of chamber restricting rolls 42, 44, and take-up and tensioning rolls 46, 48.

Six rubber belts 49 are trained side-by-side over the rolls, with the exception of the roll 22 which acts as a stripper roll, to provide the configuration shown in Figs. 1 and 2 and they move in the direction indicated by arrows 50, the stripper roll 22 being driven anti-clockwise as viewed in the two figures. However alternate belts only are trained over the lower foremost roll 26, whilst the remaining belts by-pass the roll 26 and run directly between the roll 24, which is at the same horizontal level as the roll 26, and the roll 28 which is approximately vertically above the roll 26. This creates, as explained and claimed in our aforesaid European patent application 82106409, a staggered array of belts affording the release of stray crop through gaps, formed as a result of the staggering, between neighbouring belts. Upwardly extending runs 52, 54 of the belts provide with the side walls a bale-forming chamber 56 which has an inlet 58 for crop received from a pick-up 60 beneath it.

In order to accommodate the increasing diameter of a growing bale core 62 in the bale-forming chamber 56, the size of the chamber must also increase and a belt take-up and tensioning mechanism 64 is provided for this purpose at either side of the machine. These mechanisms include: a pair of arms 66, 68 which are mounted on a horizontal transverse pivot shaft 70 at the forward end of the main frame 10; the take-up and tensioning roll 46 which is supported at either end at an intermediate location on the arms 66, 68; and the pair of chamber restricting rolls 42, 44 supported at the free end of the arms. The arms are biased in an anti-clockwise direction by a pair of springs one on either side of the main frame 10 of which only the right hand spring 70 is shown and only its arrangement will be described, the other being similar. The spring 70 acts through a chain 72, at its lower end, on a bias arm 74 connected rigidly to the pivot shaft 70, the chain 72 being trained over a sprocket 76. At its upper end a further chain similarly connects the spring 70 to one end of a bell crank 78, and the other end of the bell crank bears one end of the take-up and tensioning roll 48. The bias arm 74 is also restrained by a piston and cylinder unit 80 pivotally connected at one end to the free end of the bias arm 74 and at the other to the associated right hand side wall 16 of the main frame 10. A similar arrangement is provided on the left hand side of the machine so that, for example, the roll 48 is carried by bell cranks on either side.

The rear gate portion 40 is movable by a pair of upwardly extending hydraulic piston and cylinder units on either side of the main frame 10 of which only a right hand unit 82 is shown which is pivotally connected at its lower end to the forward fixed portion of the side wall 16 and at its upper end to the gate portion 40 which is swingable upwardly and downwardly about a pivot arrangement 84 at its upper forward region.

In operation, crop lying in a windrow 85 is lifted and conveyed to the baling chamber 56 where the oppositely moving runs 52, 54 of the belts, aided by the stripper roll 22, cause the crop to turn clockwise (as viewed in Figs. 1 and 2) to form the bale core 62 of increasing size which eventually overcomes the tension in the belts brought about by the tensioning mechanisms, and the arms 66, 68 consequently swing upwardly and thus the chamber 56 increases in size to accommodate as necessary the bale core 62 as its diameter grows.

During baling, crop sometimes finds its way past the edges of the belts of the runs 52, 54 to the exterior of the bale chamber 56. Much stray crop forward of the baling chamber tends to escape due to the staggered array of belts as mentioned above, but some crop can nevertheless sometimes wrap round the roll 26 at its ends where it can be ingested into bearings of the roll or cause problems in belt tracking. The difficulties are exacerbated if the crop is wet.

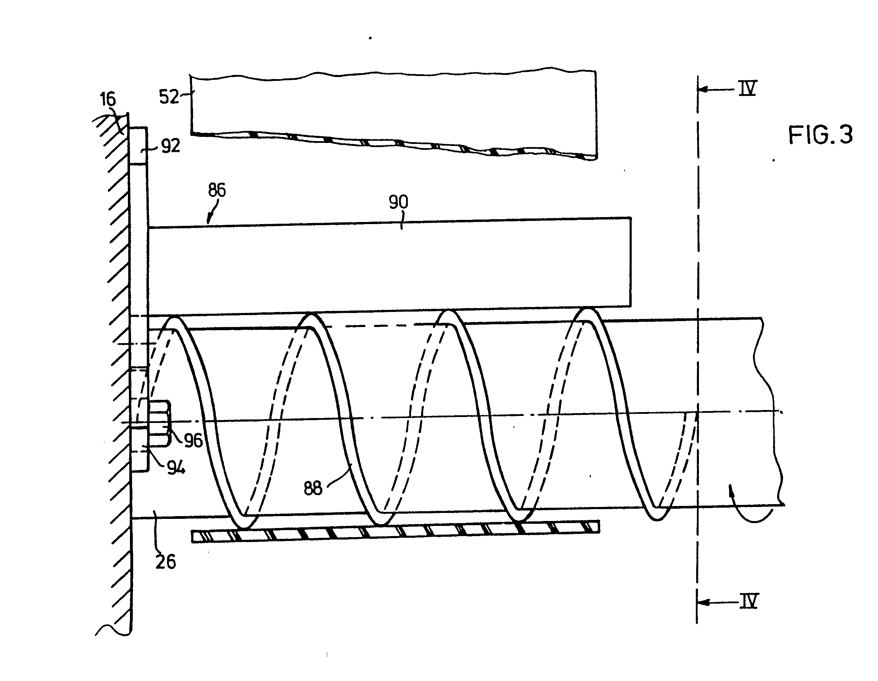

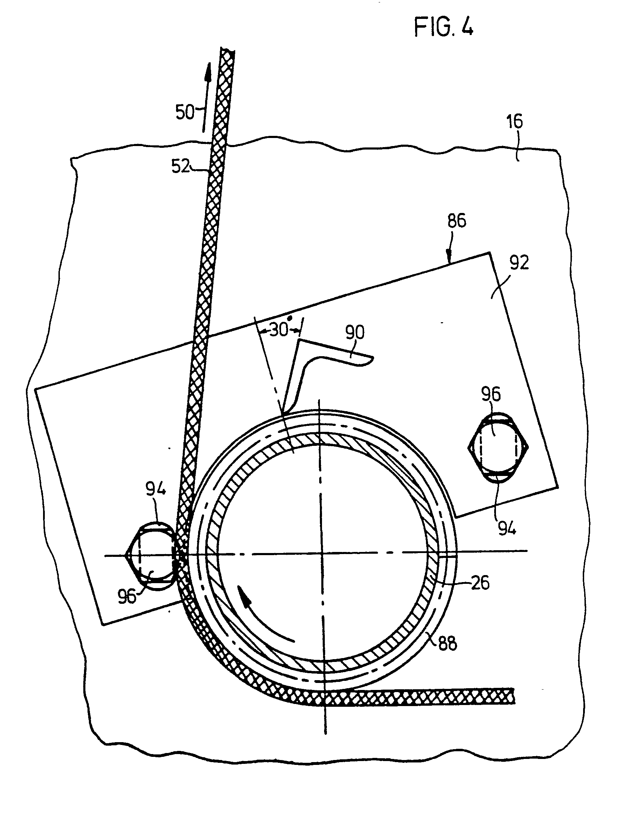

In order to reduce wrapping of crop at the ends of the roll 26 a scraper assembly 86 is provided as shown in Figs. 3 and 4 at the right hand end of the roll 26, a corresponding assembly being located at the other end. The assembly 86 illustrated comprises a spiral 88, a scraper 90, and a mounting plate 92 for the scraper. The mounting plate 92 is rectangular with a semi-circular bite taken from its lower side to accommodate the cylindrical surface of the roll 26 so that the plate straddles the roll, and with a pair of adjustment slots 94 for receiving the shanks of two bolts 96. The scraper 90 is welded to the plate 92 and extends at right angles therefrom. The scraper 90 is V-shaped in cross-section, one arm of the "V" extending from a region just ahead of the zenith of the semi-circular bite at a trailing acute angle (of 30°) from an extrapolated geometric radius line, and the remaining arm of the "V" being at right angles to the first and running in the trailing direction. Thus the "V" opens in the trailing direction with respect to roll movement. The scraper 90 is mounted by way of the plate 92 which is secured by the bolts 96 to the inside face of the right side wall 16 with the scraper 90 extending horizontally over the upper surface of the right hand end portion of the roll 26. The spiral 88 is formed from circular cross-section rod which is 5 mm in diameter or from rectangular cross-section rod of which the width is 20 mm and the height is 5 mm and the spiral is welded to the end portion of the roll 26, its hand being such as to convey crop inwardly on rotation of the roll in the anti-clockwise direction as viewed in Fig. 1 (i.e. the spiral is right handed). The mounting plate 92 is adjusted via the slots 94 to bring the scraper 90 into light contact, or just out of contact, with the spiral 88. The belt run 52 is trained over the spiral 88 which extends somewhat beyond the inner edge of the belt to the outer edge region of the neighbouring belt (not shown).

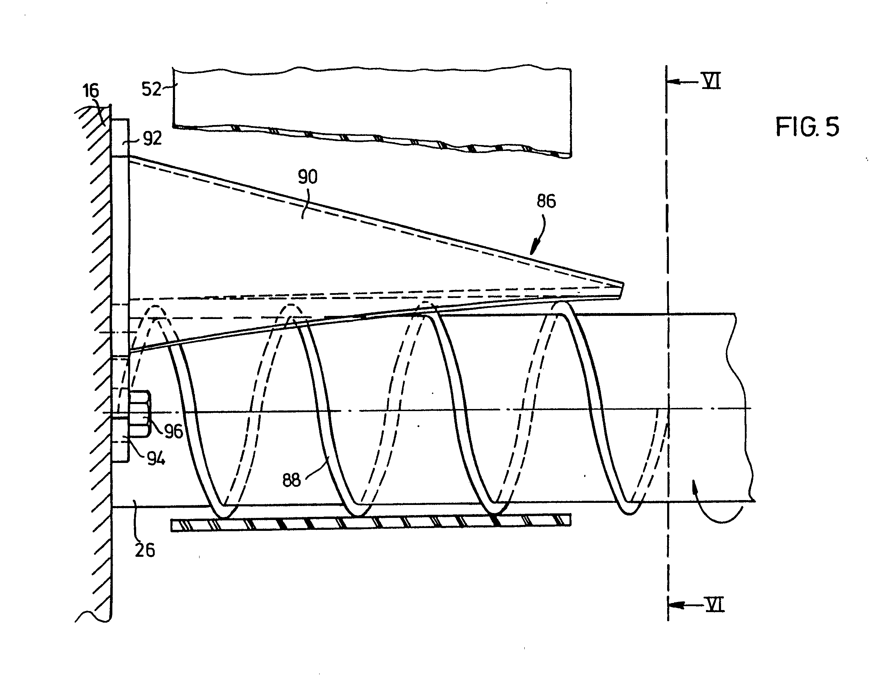

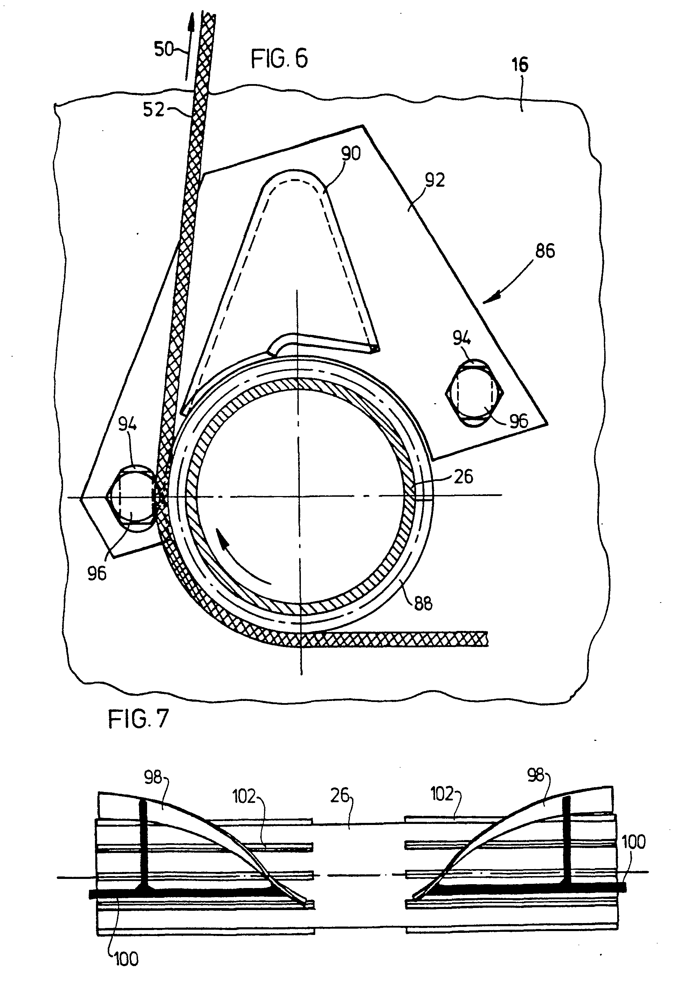

Turning now to the scraper assembly in Figs. 5 and 6, here parts corresponding to those in Figs. 3 and 4 have similar reference numerals. The mounting plate 92, in this case, is approximately in the form of a trapezium instead of a rectangle. The scraper 90 also differs from that in Figs. 3 and 4 in that it has a more complex shape, being roughly triangular in cross-section with the base of the triangle initially closely following at its leading end the contour of the roll 26 and spiral 88 and thereafter at its trailing end being well spaced from the roll as can be seen in Fig. 6. The apex of the triangle is rounded. In its lengthwise direction the scraper 90 tapers inwardly of the machine as shown in Fig. 5.

As indicated above the scraper assembly 86 at the left hand end of the roll 26 corresponds with that in Figs. 3 and 4 or in Figs. 5 and 6. The spiral is, of course, of opposite hand (i.e. left) to that on the right hand end of the roll.

The scraper assemblies operate by conveying any stray crop tending to wrap round the end portion of the roll 26 away from the end. Specifically the spiral 88 serves to convey the crop and the scraper 90 to prevent crop being carried round by the spiral. At the exit end of the spiral the crop is free to fall through the gap between neighbouring belts.

The two scraper assemblies shown in Fig. 7 are in general similar to those already described except that each has a spiral 98 which performs the function of scraping and which is mounted on a frame 100 so as to be in light contact, or just out of contact, with straight rods 102 which extend parallel to the axis of the roll 26 and are welded thereto. The term "spiral" as used herein includes an incomplete spiral.

Although the embodiments of the invention have been described in respect of being located at the end regions of the roll 26, they can alternatively or in addition be provided for other rolls wherever wrapping is likely and where the unwanted stray crop can be moved away from the site of wrapping.

## Claims

1. A machine for harvesting crop having rotatable rolls for moving the crop, excluding any machine which falls within the extent of protection conferred by European Patent No. 151 665, a said roll (26) having a scraper assembly (86) comprising a scraper (90) for preventing the crop being carried round the roll characterised in that the scraper assembly (86) includes an elongated member (88) rigid with the roll (26) and extending along it, the scraper (90) being in contact with the member or closely spaced therefrom.

2. A machine according to claim 1 characterised in that the machine is a baling machine for forming cylindrical bales of crop having a main frame (10) on which the rolls (e.g. 26) are mounted to provide a baling chamber (56) for the crop.

3. A machine according to claim 1 or 2 characterised in that the elongated member (88) is formed from rod.

4. A machine according to any preceding claim characterised in that a said scraper assembly (86) is provided at both end regions of the roll (26) in the vicinity of bearings therefor.

5. A machine according to any preceding claim characterised in that a plurality of rolls is provided with a plurality of scraper assemblies (86).

6. A machine according to any preceding claim characterised in that the scraper (90) is of V-shaped cross-section.

7. A machine according to claim 6 characterised in that the "V" opens in the trailing direction with respect to the rotation of the roll (26), an arm of the "V" being in contact with, or closely spaced from, the elongated member (88) and making a trailing acute angle with an extrapolated geometric radius line of the roll.

8. A machine according to claim 7 characterised in that the arms of the "V" are substantially at right angles one to the other.

9. A machine according to claim 7 or 8 characterised in that the said acute angle is 30°.

10. A machine according to any of claims 1 to 5 characterised in that the scraper (90) is approximately triangular in cross-section.

11. A machine according to claim 10 characterised in that the scraper (90) in its lengthwise direction tapers in a direction inwardly of the machine.

12. A machine according to claim 10 or 11 characterised in that a leading portion of the base of the triangle is in contact with, or closely spaced from, the elongated member (88) and a trailing portion thereof is well spaced from the elongated member (88).

13. A machine according to any preceding claim characterised in that the scraper (90) is rigidly attached to a mounting plate (92) at right angles thereto, the mounting plate (92) being attached to the frame (10) and straddling the roll (26).

14. A machine according to claim 13 characterised in that the mounting plate (92) is attached to the frame (10) by bolts (96) and has slots (94) receiving the bolts (96), the slots (94) allowing adjustment of the plate (92) relative to the frame (10).

15. A machine according to claim 2 or claim 2 and any of claims 3 to 14 characterised in that the said roll (26) is the lower foremost roll (26) of the baling machine.

16. A harvesting machine according to claim 1 characterised in that the machine is a forage harvester.

17. A machine according to claim 1 or 2 characterised in that the scraper assembly comprises a spiral (98) as scraper and a plurality of straight t rods (102) rigid with the roll (26).

18. A roll assembly, for a machine for harvesting crop, excluding any roll assembly which falls within the extent of protection conferred by European Patent No. 151 665, comprising a roll (26) for moving the crop and a scraper assembly (86) comprising a scraper (90) for preventing crop being carried round the roll characterised in that the scraper assembly (86) includes an elongated member (88) rigid with the roll (26) and extending along it.

19. A roll assembly according to claim 18 characterised in that the elongated member (88) is formed from rod.

20. A roll assembly according to claim 18 to 19 characterised in that a said scraper assembly (86) is provided at both end regions of the roll (26).

21. A roll assembly according to any of claims 18 to 20 characterised in that the scraper (90) is V-shaped in cross-section.

22. A roll assembly according to any of claims 18 to 20 characterised in that the scraper (90) is approximately triangular in cross-section.

23. A roll assembly according to claim 22 characterised in that the scraper (90) tapers in its lengthwise direction.

24. A roll assembly according to any of claims 18 to 23 characterised in that the scraper (90) is rigidly attached to a mounting plate (92) at right angles thereto, the mounting plate being adapted for attachment to a frame (10) of the harvesting machine and for straddling the roll.

**Patentansprüche**

1. Maschine zum Ernten von Erntegut mit drehbaren Rollen zum Bewegen des Erntegutes — unter Ausschluß jeder Maschine, die in den Schutzbereich des europäischen Patentes Nr. 151 665 fällt —, bei der eine genannte Rolle (26) eine Schaberanordnung (86) aufweist, welche einen Schaber (90) umfaßt, um zu verhindern, daß Futter um die Rolle getragen wird, dadurch gekennzeichnet, daß Schaberanordnung (86) ein langgestrecktes Glied (88) umfaßt, das starr mit der Rolle (26) verbunden ist und sich entlang der Rolle erstreckt, während der Schaber (90) mit dem Glied in Kontakt steht oder sich im geringen Abstand von diesem befindet.

2. Maschine nach Anspruch 1, dadurch gekennzeichnet, daß sie eine Ballenformmaschine zum Formen zylindrischer Ballen aus Erntegut ist mit einem Hauptrahmen (10), auf dem die Rollen (z.B. 26) montiert sind, um eine Ballenformkammer (56) für das Futter zu bilden.

3. Maschine nach Anspruch 1 oder 2, dadurch gekennzeichnet, daß das langgestreckte Glied (88) durch eine Stange gebildet wird.

4. Maschine nach irgendeinem der voranstehenden Ansprüche, dadurch gekennzeichnet, daß eine genannte Schaberanordnung (86) an beiden Endbereichen der Rolle (26) in der Nachbarschaft von deren Lager angeordnet ist.

5. Maschine nach irgendeinem der voranstehenden Ansprüche, dadurch gekennzeichnet, daß eine Mehrzahl von Rollen vorgesehen ist mit einer Mehrzahl von Schaberanordnungen (86).

6. Maschine nach irgendeinem der voranstehenden Ansprüche, dadurch gekennzeichnet, daß der Schaber (90) einen V-förmigen Querschnitt aufweist.

7. Maschine nach Anspruch 6, dadurch gekennzeichnet, daß der V-förmige Querschnitt sich in Bezug auf die Drehrichtung der Rolle (26) sich nach rückwärts öffnet, daß ein Arm des "V" mit dem langgestreckten Glied (88) in Kontakt steht oder im geringen Abstand von diesem angeordnet ist und mit einer extrapolierten geometrischen Radiuslinie der Rolle einen spitzen Nachlaufwinkel bildet.

8. Maschine nach Anspruch 7, dadurch gekennzeichnet, daß die Arme des "V" zueinander unter einem im wesentlichen rechten Winkel stehen.

9. Maschine nach Anspruch 7 oder 8, dadurch gekennzeichnet, daß der genannte spitze Winkel 30° beträgt.

10. Maschine nach irgendeinem der Ansprüche 1 bis 5, dadurch gekennzeichnet, daß der Schaber (90) einen annähernd dreieckförmigen Querschnitt aufweist.

11. Maschine nach Anspruch 10, dadurch gekennzeichnet, daß der Schaber (90) sich in seiner Längsrichtung zum Inneren der Maschine hin verjüngt.

12. Maschine nach Anspruch 10 oder 11, dadurch gekennzeichnet, daß ein voranlaufender Abschnitt der Basis des Dreiecks mit dem langgestreckten Glied (88) in Kontakt steht oder nur einen geringen Abstand von diesem aufweist und ein nachlaufender Bereich sich im merklichen Abstand von dem langgestreckten Glied (88) befindet.

13. Maschine nach irgendeinem der voranstehenden Ansprüche, dadurch gekennzeichnet, daß der Schaber (90) an einer Montageplatte (92) unter rechten Winkeln zu dieser starr angebracht ist und die Montageplatte (92) an dem Rahmen (10) angebracht ist und die Rolle (26) sattelförmig übergreift.

14. Maschine nach Anspruch 13, dadurch gekennzeichnet, daß die Montageplatte (92) an dem Rahmen (10) durch Bolzen (96) angebracht ist und Schlitze (94) zum Aufnehmen der Bolzen (96) aufweist, wobei die Schlitze (94) eine Einstellung der Platte (92) gegenüber dem Rahmen (10) erlauben.

15. Maschine nach Anspruch 2 oder Anspruch 2 und irgendeinem der Ansprüche 3 bis 14, dadurch gekennzeichnet, daß die genannte Rolle (26) die untere und am weitesten vorne liegende Rolle (26) der Ballenformmaschine ist.

16. Erntemaschine nach Anspruch 1, dadurch gekennzeichnet, daß die Maschine eine Futtererntemaschine ist.

17. Maschine nach Anspruch 1 oder 2, dadurch gekennzeichnet, daß die genannten Rolle (26) eine Mehrzahl von geraden Stangen (102) und die Schaberanordnung eine Wendel (98) umfaßt.

18. Rollenanordnung für eine Maschine zum Ernten von Erntegut, — mit Ausnahme jeder Rollenanordnung, die in den Schutzbereich des europäischen Patentes Nr. 151 665 fällt —, mit einer Rolle (26) zum Bewegen des Erntegutes und einer Schaberanordnung (86), welche einen Schaber (90) umfaßt, um zu verhindern, daß Erntegut um die Rolle getragen wird, dadurch gekennzeichnet, daß die Schaberanordnung (86) ein langgestrecktes Glied (88) umfaßt, das starr mit der Rolle (26) ausgebildet ist und sich entlang dieser erstreckt.

19. Rollenanordnung nach Anspruch 18, dadurch gekennzeichnet, daß das langgestreckte Glied (88) durch eine Stange gebildet wird.

20. Rollenanordnung nach Anspruch 18 oder 19, dadurch gekennzeichnet, daß eine genannte Schaberanordnung (86) an beiden Endbereichen der Rolle (26) vorgesehen ist.

21. Rollenanordnung nach irgendeinem der Ansprüche 18 bis 20, dadurch gekennzeichnet, daß der Schaber (90) im Querschnitt V-förmig ist.

22. Rollenanordnung nach irgendeinem der Ansprüche 18 bis 20, dadurch gekennzeichnet, daß der Schaber (90) einen annähernd dreieckförmigen Querschnitt aufweist.

23. Rollenanordnung nach Anspruch 22, dadurch gekennzeichnet, daß der Schaber (90) sich in seiner Längsrichtung verjüngt.

24. Rollenanordnung nach irgendeinem der Ansprüche 18 bis 23, dadurch gekennzeichnet, daß der Schaber (90) an einer Montageplatte (92) unter rechtem Winkel zu dieser angebracht ist und die Montageplatte so ausgebildet ist, daß sie an einem Rahmen (10) der Erntemaschine angebracht werden kann und die Rolle sattelförmig übergreift.

**Revendications**

1. Machine de ramassage de récolte, comprenant des rouleaux rotatifs pour l'entraînement de la récolte, à l'exclusion de toute machine qui entre dans le cadre de la protection conférée par le brevet européen Nà 151 665, un dit rouleau (26) ayant un dispositif de raclage (86) comprenant un racleur (90) pour empêcher la matière récoltée d'être entraînée autour du rouleau, caractérisée en ce que le dispositif de raclage (86) comprend un élément allongé (88) solidaire du rouleau (26) et s'étendant le long de celui-ci, le racleur (90) étant en contact avec cet élément ou à faible distance de celui-ci.

2. Machine suivant la revendication 1, caractérisée en ce que la machine est une presse à balles pour former des balles cylindriques de récolte, comprenant un châssis principal (10) sur lequel les rouleaux (par exemple 26) sont montés de manière à définir une chambre de formation de balle (56) pour la récolte.

3. Machine suivant la revendication 1 ou 2, caractérisée en ce que l'élément allongé (88) est constitué d'une barre.

4. Machine suivant l'une quelconque des revendications précédentes, caractérisée en ce qu'un dit dispositif de raclage (86) est prévu aux deux régions d'extrémité du rouleau (26) au voisinage des paliers de celui-ci.

5. Machine suivant l'une quelconque des revendications précédentes, caractérisée en ce qu'une pluralité de rouleaux sont prévus avec une pluralité de dispositifs de raclage (86).

6. Machine suivant l'une quelconque des revendications précédentes, caractérisée en ce que le racleur (90) est en forme de V en section transversale.

7. Machine suivant la revendication 6, caractérisée en ce que le "V" s'ouvre dans la direction arrière par rapport à la rotation du rouleau (26), une branche du V étant en contact avec l'élément allongé (88), ou à faible distance de celui-ci, et formant un angle aigu vers l'arrière par rapport au prolongement du rayon géométrique du rouleau.

8. Machine suivant la revendication 7, caractérisée en ce que les branches du V sont sensiblement perpendiculaires l'une à l'autre.

9. Machine suivant la revendication 7 ou 8, caractérisée en ce que ledit angle aigu est de 30°.

10. Machine suivant l'une quelconque des revendications 1 à 5, caractérisée en ce que le racleur (90) est sensiblement triangulaire en section transversale.

11. Machine suivant la revendication 10, caractérisée en ce que le racleur (90) diminue de section dans sa direction longitudinale vers l'intérieur de la machine.

12. Machine suivant la revendication 10 ou 11, caractérisée en ce qu'une partie avant de la base du triangle est en contact avec l'élément allongé (88), ou à faible distance de celui-ci, et une partie arrière de la base est nettement espacée de l'élément allongé (88).

13. Machine suivant l'une quelconque des revendications précédentes, caractérisée en ce que le racleur (90) est rigidement fixé à une plaque de montage (92) perpendiculairement à celle-ci, la plaque de montage (92) étant fixée au châssis (10) et chevauchant le rouleau (26).

14. Machine suivant la revendication 13, caractérisée en ce que la plaque de montage (92) est fixée au châssis (10) par des vis (96) et elle comporte des rainures (94) de réception des vis (96), les rainures (94) permettant un réglage de la plaque (92) par rapport au châssis (10).

15. Machine suivant la revendication 1 ou la revendication 2 et l'une quelconque des revendications 3 à 14, caractérisée en ce que ledit rouleau (26) est le rouleau inférieur avant (26) de la presse à balles.

16. Machine à récolter suivant la revendication 1, caractérisée en ce que la machine est une récolteuse de fourrage.

17. Machine suivant la revendication 1 ou 2, caractérisée en ce que le dispositif de raclage comprend une spire de vis (98) comme racleur, et une pluralité de barres rectilignes (102) solidaires du rouleau (26).

18. Dispositif de rouleau, pour une machine de ramassage de récolte, à l'exclusion de tout dispositif de rouleau qui entre dans le cadre de la protection conférée par le brevet européen N° 151 665, comprenant un rouleau (26) pour entraîner la récolte et un dispositif de raclage (86) comportant un racleur (90) pour empêcher la matière récoltée d'être entraînée autour du rouleau, caractérisé en ce que le dispositif de raclage (86) comprend un élément allongé (88) solidaire du rouleau (26) et s'étendant le long de celui-ci.

19. Dispositif de rouleau suivant la revendication 18, caractérisé en ce que l'élément allongé (88) est constitué par une barre.

20. Dispositif de rouleau suivant la revendication 18 ou 19, caractérisé en ce qu'un dit dispositif de raclage (86) est prévu aux deux régions d'extrémité du rouleau (26).

21. Dispositif de rouleau suivant l'une quelconque des revendications 18 à 20, caractérisé en ce que le racleur (90) a une section transversale en forme de V.

22. Dispositif de rouleau suivant l'une quelconque des revendications 18 à 20, caractérisé en ce que le racleur (90) a une section transversale approximativement triangulaire.

23. Dispositif de rouleau suivant la revendication 22, caractérisé en ce que le racleur (90) va en diminuant de section transversale, dans sa direction longitudinale.

24. Dispositif de rouleau suivant l'une quelconque des revendications 18 à 23, caractérisé en ce que le racleur (90) est rigidement fixé à une plaque de montage (92) perpendiculairement à celle-ci, la plaque de montage étant prévue pour être fixée à un châssis (10) de la machine à récolter et pour chevaucher le rouleau.

FIG.1

FIG. 2

FIG.3

FIG. 4

FIG. 5

EP 0 152 085 B1

FIG. 6

FIG. 7